# FASCICULE DE BREVET EUROPEEN

(11) **EP 1 648 331 B1**
(45) Date de publication et mention de la délivrance du brevet: **16.01.2008**
(21) Numéro de dépôt: 04710059.9
(22) Date de dépôt: 11.02.2004
(51) Int. Cl.: A61C 19/02, A61C 9/00

(54) **NECESSAIRE POUR LA PRISE INDIVIDUELLE D'EMPREINTES DENTAIRES CHEZ LES HUMAINS ET CHEZ LES ANIMAUX**
KIT ZUM HERSTELLEN INDIVIDUELLER ABDRÜCKE VON BEZAHNTEN MENSCHLICHEN UND TIERISCHEN KIEFERN
KIT WHICH IS USED TO TAKE INDIVIDUAL HUMAN OR ANIMAL DENTAL IMPRESSIONS

(30) Priorité: 11.02.2003 FR 0301622
(43) Date de publication de la demande: 26.04.2006
(73) Titulaire: Livolsi, Lydie, 51100 Reims (FR)
(72) Inventeur: Livolsi, Lydie, 51100 Reims (FR)
(74) Mandataire: Metz, Paul
(86) Numéro de dépôt international: PCT/FR2004/000307
(87) Numéro de publication internationale: WO 2004/071329

(56) Documents cités:
- EP-A- 0 319 639
- FR-A- 2 630 905
- FR-A- 2 710 249
- US-A- 3 767 085
- US-A- 3 878 610
- US-A- 4 763 791
- US-A- 4 828 113
- US-A- 5 772 432

## Description

La présente invention se rapporte à un nécessaire individuel ou kit pour la prise autonome d'empreintes dentaires chez les humains et chez les animaux.

La prise d'empreinte classique s'effectue chez les dentistes avant la confection de la prothèse dentaire. Elle sert au prothésiste comme référence pour la détermination de la taille mais aussi de la forme de la prothèse.

Actuellement, la prise classique d'une empreinte dentaire s'effectue par les dentistes, par exemple à l'aide d'un kit tel que décrit dans le document US 4 763 791 et se déroule de la façon suivante.

La technique consiste à enregistrer l'arcade dentaire dans un matériau de prise d'empreinte qui remplit un moule adapté appelé porte-empreinte dentaire. A cet effet, il existe différents matériaux se présentant sous différentes formes de conditionnement et viscosités (bâtonnets, cartouches pour pistolets mélangeurs, poudre, capsules, pots ou tubes) selon les indications.

Pour prendre une empreinte, le dentiste va badigeonner l'intrados du porte-empreinte d'un adhésif indiqué pour le matériau qu'il a prévu d'utiliser, ceci pour assurer le bon accrochage du matériau au porte-empreinte et éviter ainsi son décollage lors de la désinsertion.

Le dentiste prépare ensuite le matériau pour prise d'empreinte. Par exemple pour une empreinte en alginate, il mélange la poudre à de l'eau à l'aide d'une spatule jusqu'à obtenir une pâte en respectant le rapport poudre/eau indiqué par le fabricant mais aussi la durée de malaxage. Il remplit le porte-empreinte avec cette pâte et l'uniformise sur les rebords du porte-empreinte. Le patient ouvre la bouche et le dentiste y introduit en biais le porte-empreinte rempli du matériau pour prise d'empreinte. Par un léger mouvement de pivotement, il ramène le manche du porte-empreinte vers l'axe central de la bouche et le fait passer par le milieu de la lèvre de manière à ce que les deux axes coïncident. Il écarte la lèvre de la mâchoire concernée par la prise d'empreinte et pousse légèrement le porte-empreinte vers le fond du vestibule ou de la gencive pour que le matériau fuse gentiment. Lorsqu'il sent la butée du fond de gencive, il s'arrête, maintient le porte-empreinte et attend la prise du matériau dont la durée est variable. Lorsque le matériau est dur, la vérification s'effectuant en touchant le matériau qui a fusé à travers les perforations du porte-empreinte, il désinsère légèrement sur le côté pour laisser entrer de l'air qui finira rapidement le travail de durcissage en surface près des dents. Il désinsère ensuite délicatement le reste. L'empreinte est ainsi prise. Elle se trouve dans le porte-empreinte avec lequel elle est envoyée chez le prothésiste.

L'invention a pour but de procurer aux, ou de mettre à la disposition des, dentistes et à toute personne qualifiée ou documentée un coffret ou présentoir, contenant le nécessaire le mieux adapté à la prise d'au moins une empreinte dentaire ou d'une empreinte d'hémi-arcade dentaire ou sectorielle, ou un kit pour la prise d'empreinte de rebasage ou de fixation des appareils dentaires.

L'invention vise également la prise autonome d'empreintes dentaires.

L'invention permet ainsi de gagner en coût, en temps de préparation et de minimiser les pertes. Elle procure aussi un gain de place, une réduction des stocks et une diminution de la quantité des produits à stériliser.

Le nécessaire à la prise d'empreintes dentaires selon l'invention permet:
- au chirurgien-dentiste ou à toute personne qualifiée ou expérimentée ou à toute personne simplement documentée, de prendre l'empreinte en cas de besoin. L'ensemble est prêt mis à l'étalage ou dans un emballage et dans un conditionnement sous la forme d'une boîte ou d'un coffret à portée de main constituant une unité technique et commerciale. Grâce à lui, on réalise un gain de temps et le gaspillage notamment en produit diminue fortement.
- au dentiste en situation difficile ou d'éloignement, notamment en cas de guerre, d'émeutes sanglantes, de base avancée, de plate-forme ou autre lieu temporaire de vie ou lieu lointain de résidence, de continuer à bien faire son travail.
- au vétérinaire de disposer de tout le nécessaire à portée de main, réalisant ainsi un gain de temps et un confort appréciable sur le lieu de vie de l'animal.

On peut citer également les chirurgiens-dentistes dans les pays en voie de développement qui, du fait d'un nombre de prises d'empreintes trop faible, trouvent trop onéreux l'achat séparé à l'unité de tous les éléments indispensables à la prise d'empreinte.

L'invention permet aussi à l'homme de la rue moyennant une formation ou un enseignement adapté, ou une démonstration préalable, d'arriver de façon satisfaisante à prendre une empreinte dentaire sur lui-même.

L'invention sera bien comprise à la lecture de la description suivante faite à titre d'exemple sur un mode de réalisation en référence aux dessins dans lesquels:
- la figure 1 est une vue schématique en perpective montrant une variante de nécessaire pour prise d'empreinte conforme à l'invention,
- la figure 2 est une vue simplifiée en perspective d'un exemple de réalisation d'un type de mélangeur-injecteur utilisable dans le nécessaire selon l'invention.

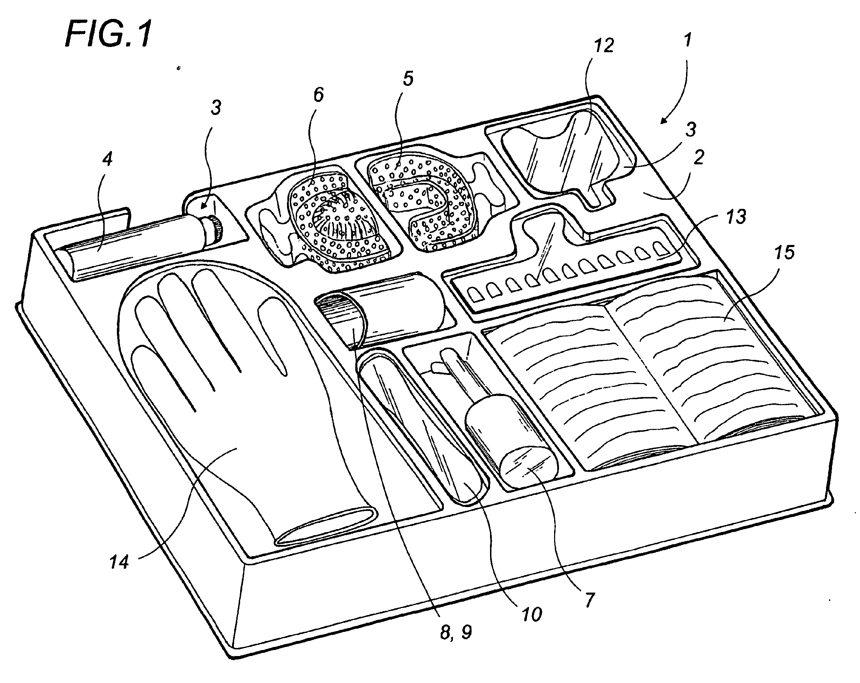

Le nécessaire pour prise d'empreinte comprend comme représenté schématiquement sur la figure 1, plusieurs objets réunis dans un même présentoir, coffret ou boîte 1 pouvant se matérialiser par un support 2 compartimenté ou alvéolé ou pourvu de niches ou de logements tels que 3. Ce support peut être aussi réalisé par exemple en matière plastique injectée ou de préférence thermoformée, procédé qui permet de former facilement des logements et s'avère simple et économique à mettre en oeuvre.

Le conditionnement, boîte ou coffret, peut évidemment être placé sur un présentoir.

Parmi les objets et produits nécessaires, il s'agit d'abord d'un matériau ou d'un produit 4 pour prise d'empreinte, conditionné sous différentes formes comme il sera décrit ci-après. Il s'agit ensuite d'au moins un porte-empreinte par exemple du type universel dont, dans le cas de deux, un au moins porte-empreinte 5 pour la mâchoire du bas et un au moins porte-empreinte 6 pour la mâchoire du haut permettant à chaque fois la prise d'empreinte d'une arcade ou d'une hémi-arcade dentaire.

Le ou chaque porte-empreinte 5 ou 6 est de préférence du type ajustable, transversalement, longitudinalement ou les deux à la fois, manuellement par coulissement ou déformation de pièces ou par d'autres moyens. Il peut s'agir aussi de porte-empreintes rigides de dimensions fixes en nombre suffisant pour couvrir les différences dimensionnelles entre les individus.

On peut également prévoir des porte-empreintes simples de plusieurs tailles.

Selon la gamme des tailles à couvrir deux modèles peuvent s'avérer insuffisants et de ce fait on peut envisager d'en utiliser deux supplémentaires, voire plus, dans le cas de porte-empreintes de petite amplitude d'ajustement, ou d'en prévoir de supplémentaires qui sont des modèles pour les enfants.

On peut également envisager des porte-empreintes géométriquement variables par exemple adaptables par extension transversale et longitudinale.

On ajoute un flacon 7 ou autre contenant d'un produit adhésif qui sera badigeonné ou pulvérisé sur les faces internes de chaque porte-empreinte au moment de la prise par exemple autonome d'empreinte. On peut aussi envisager à cet effet un porte-empreinte déjà enduit d'un produit adhésif qui sera protégé par une feuille ou une pellicule à enlever au moment de l'utilisation. Une autre façon peut consister à utiliser un produit activable au moment de l'utilisation par un moyen extérieur, par exemple par un rayonnement lumineux ou par un produit activateur.

Le ou chaque porte-empreinte pourra aussi être préalablement imprégné d'un produit adhésif.

Le nécessaire comprend également un dispositif de préparation du produit 4 pour prise d'empreinte appelé mélangeur ou dispositif mélangeur 8 par exemple sous la forme d'un bol ou pot 9 et d'une spatule 10 à malaxer.

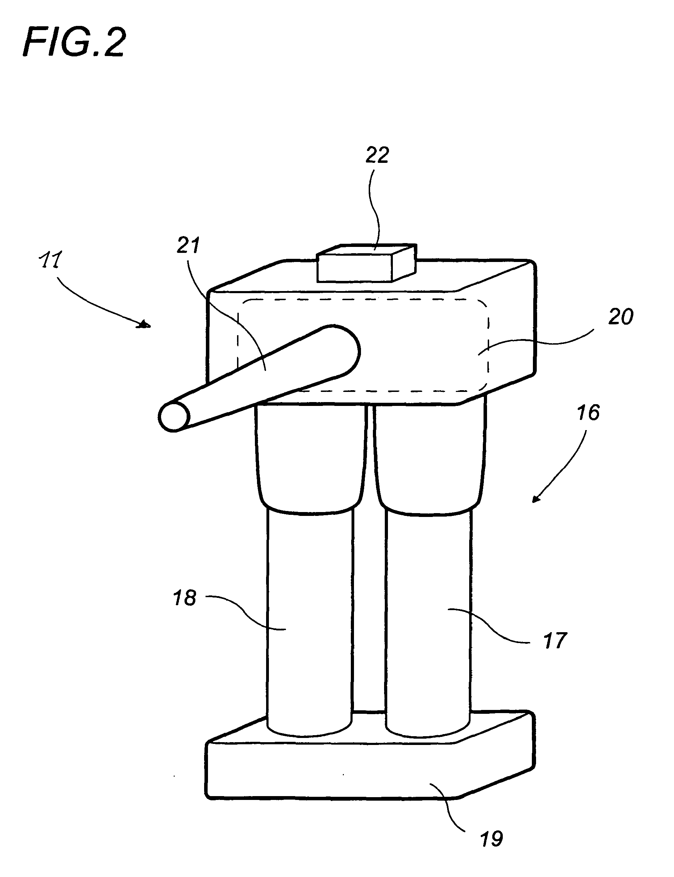

Ce dispositif peut être réalisé sous la forme d'un mélangeur-injecteur 11 par exemple à deux compartiments dans le cas d'un produit bi-composant, l'un pour le produit de base et l'autre pour l'activateur ou le durcisseur. Une forme de réalisation d'un exemple de ce type de mélangeur-injecteur est représentée sur la figure 2.

Le nécessaire comprendra aussi un instrument ou un matériau permettant d'enregistrer l'occlusion tel par exemple qu'une feuille de cire 12 ou une pâte.

Le nécessaire se composera également d'un instrument ou d'un matériau permettant la prise de la teinte tel que par exemple un teintier, un pastilleur ou un autre moyen équivalent 13.

Pour des raisons d'hygiène, une paire de gants stériles 14 sera jointe au lot.

On prévoit également pour l'utilisation par des tiers non formés ou par le sujet lui même ou par un membre de sa famille ou toute autre personne, un mode d'emploi détaillé sous la forme d'un carnet, d'un livret 15 ou de quelques feuilles ou sous la forme d'un support audiovisuel, par exemple une cassette vidéo ou un disque optique, ou tout autre.

Le dispositif mélangeur-injecteur représenté à titre d'exemple sur la figure 2 comporte un corps 16 se composant principalement de deux compartiments tubulaires 17 et 18 reposant sur une embase 19 et qui débouchent dans une chambre de mélange 20 dans laquelle s'effectue le mélange des deux composants avant leur sortie du dispositif par l'intermédiaire d'une buse ou d'une canule 21 par exemple interchangeable. Le produit résultant peut ainsi être facilement distribué dans les gouttières ou les gorges du corps de tous les porte-empreintes par exemple les porte-empreintes 5 et 6. Les deux composants sont poussés hors des compartiments tubulaires 17 et 18 par exemple par un système à piston à la manière d'une seringue sous l'effet d'une action mécanique de poussée ou de pompage par l'intermédiaire d'un bouton ou d'une touche à poussoir 22. Ainsi, l'ensemble pourrait aussi être constitué de deux seringues juxtaposées comportant chacune un piston dont les queues seraient jumelées et actionnées manuellement en vue de la sortie simultanée des deux composants dans la chambre de mélange ou tout autre arrangement similaire.

De façon préférentielle, le mélangeur-injecteur utilise des contenants préremplis et microdosés en produit. Ces contenants peuvent être interchangeables et donc constituer des recharges à changer à chaque usage. Pour la variante représentée sur la figure 2, les compartiments tubulaires sont remplis de produits dosés au moment de la fabrication.

Ce type de mélangeur-injecteur peut être stérile et à usage unique, chargé d'origine en produit microdosé ou comporter des recharges interchangeables.

## Revendications

1. Nécessaire pour la prise personnelle ou par un tiers d'au moins une empreinte dentaire chez les humains et chez les animaux renfermant dans une même boite un ou un même coffret (1) ou un même présentoir :
. au moins un porte-empreinte (5),
. un mélangeur (8) et ses accessoires pour la préparation du produit pour prise d'empreinte,
. produit (4) pour prise d'empreinte conditionné dans un contenant, tube, flacon, pot ou autre,
. un contenant (7) d'adhésif pour coller le produit pour prise d'empreinte sur les faces internes de chaque porte-empreinte (5, 6),
. un instrument ou matériau pour enregistrer l'occlusion (12),
. un instrument ou un matériau permettant la prise de la teinte (13),
. une paire de gants stériles (14),
. un livret ou carnet (15) ou support audiovisuel de mode d'emploi.

2. Nécessaire selon la revendication 1 **caractérisé en ce qu'**il renferme deux porte-empreintes (5, 6) un pour la mâchoire du bas et l'autre pour la mâchoire du haut.

3. Nécessaire selon la revendication 1 ou 2 **caractérisé en ce que** le ou chaque porte-empreinte est ajustable.

4. Nécessaire selon la revendication 3 **caractérisé en ce que** le ou chaque porte-empreinte est extensible longitudinalement.

5. Nécessaire selon la revendication 3 **caractérisé en ce que** le ou chaque porte-empreinte est extensible transversalement.

6. Nécessaire selon la revendication 3 **caractérisé en ce que** le ou chaque porte-empreinte est extensible longitudinalement et transversalement.

7. Nécessaire selon la revendication 1 **caractérisé en ce que** le produit pour prise d'empreinte est bi-composant.

8. Nécessaire selon la revendication 1 **caractérisé en ce que** le produit pour prise d'empreinte est conditionné en doses.

9. Nécessaire selon la revendication 1 **caractérisé en ce que** le mélangeur est un mélangeur-injecteur (11).

10. Nécessaire selon la revendication précédente **caractérisé en ce que** le mélangeur-injecteur (11) comporte des contenants préremplis de produit pour prise d'empreinte.

11. Nécessaire selon la revendication 8 **caractérisé en ce que** le produit (4) pour prise d'empreinte est conditionné en recharges microdosées pour le mélangeur-injecteur (11).

12. Nécessaire selon la revendication 9 ou 10 **caractérisé en ce que** le mélangeur-injecteur (11) est à usage unique.

13. Nécessaire selon l'une quelconque des revendications 9 à 12 **caractérisé en ce que** le mélangeur-injecteur (11) présente un corps (16) se composant principalement de deux compartiments tubulaires (17, 18) reposant sur une embase (19), ceux-ci débouchant dans une chambre de mélange (20) dans laquelle s'effectue le mélange des deux composants avant leur sortie par une buse ou canule (21), le produit étant mélangé et expulsé par une action manuelle sur une touche-poussoir (22) agissant sur un système à pistons.

14. Nécessaire selon la revendication précédente **caractérisé en ce que** les compartiments tubulaires (17, 18) sont interchangeables.

15. Nécessaire selon la revendication 1 **caractérisé en ce que** le ou chaque porte-empreinte (5, 6) est imprégné ou recouvert ou enduit d'un produit adhésif.

16. Nécessaire selon la revendication précédente **caractérisé en ce que** le produit adhésif est activable par un moyen extérieur.

17. Nécessaire selon la revendication 15 **caractérisé en ce que** le produit adhésif est protégé par une pellicule enlevable au moment de l'usage.

18. Nécessaire selon la revendication 1 **caractérisé en ce que** l'instrument pour enregistrer l'occlusion est une feuille de cire (12).

19. Nécessaire selon la revendication 1 **caractérisé en ce que** la boite ou le coffret (1) est compartimenté.

20. Nécessaire selon la revendication précédente **caractérisé en ce que** le support du coffret (1) est réalisé en matière plastique thermoformée.

21. Nécessaire selon la revendication 19 **caractérisé en ce que** le support du coffret (1) est réalisé en matière plastique injectée.

## Claims

1. Kit for capture, by oneself or by another person, of at least a human or animal dental impression, enclosing within the same box or the same case (1) or the same display unit the following items:
. at least an impression tray (5, 6),
. a mixer (8, 11) and its accessories for the preparation of the impression capture product,
. an impression capture product (4) packed in a container, tube, flask, pot or other,
. an adhesive container (7) to paste the impression capture product on internal faces of each impression tray (5, 6),
. an instrument or material to record an occlusion (12),
. an instrument or a material for colour capture (13),
. a pair of sterile gloves (14),
. a booklet or notebook (15) or audio-visual support of instructions.

2. Kit according to claim 1 **characterized in that** it contains two impression trays (5, 6), one for the lower jaw and the other for the upper jaw.

3. Kit according to claim 1 or 2 **characterized in that** the or each impression tray is adjustable.

4. Kit according to claim 3 **characterized in that** the or each impression tray is longitudinally extensible.

5. Kit according to claim 3 **characterized in that** the or each impression tray is transversely extensible.

6. Kit according to claim 3 **characterized in that** the or each impression tray is longitudinally and transversely extensible.

7. Kit according to claim 1 **characterized in that** the impression capture product is bicomponent.

8. Kit according to claim 1 **characterized in that** the impression capture product is packed in doses.

9. Kit according to claim 1 **characterized in that** the mixer is a mixer-injector (11).

10. Kit according to the preceding claim **characterized in that** the mixer-injector (11) comprises containers pre-filled with impression capture product.

11. Kit according to claim 8 **characterized in that** the impression capture product (4) is packed in micro-dosed refills for the mixer-injector (11).

12. Kit according to claim 9 or claim 10 **characterized in that** the mixer-injector (11) is for single use.

13. Kit according to any one of claims 9 to 12 **characterized in that** the mixer-injector (11) has a body (16) mainly composed of two tubular compartments (17, 18) resting on a base (19), those compartments emerging in a mixing chamber (20) in which is carried out the mixture of the two components before their delivery by a nozzle or tube (21), the product being mixed and expelled by a manual action on a push-button (22) acting on a piston device.

14. Kit according to the preceding claim **characterized in that** the tubular compartments (17, 18) are interchangeable.

15. Kit according to claim 1 **characterized in that** the or each impression tray (5, 6) is impregnated or covered or coated with an adhesive product.

16. Kit according to the preceding claim **characterized in that** the adhesive product may be activated by an exterior means.

17. Kit according to claim 15 **characterized in that** the adhesive product is protected by a film removable before use.

18. Kit according to claim 1 **characterized in that** the instrument to register an occlusion is a wax sheet (12).

19. Kit according to claim 1 **characterized in that** the box or the case (1) is compartmentalized.

20. Kit according to the preceding claim **characterized in that** the support of the case (1) is made of thermoformed plastic.

21. Necessary according to claim 19 **characterized in that** the support of the box (1) is made of injected plastic.

## Patentansprüche

1. Materialkit zum Aufnehmen, selber oder mit Hilfe einer Dritten Person, mindestens eines Zahnabdruckes von einem Menschen oder von einem Tier, welches in derselben Schachtel oder demgleichen Kästchen (1), oder derselben Schaupackung folgendes enthält :
. mindestens einen Abdruckhalter (5, 6),
. einen Mischer (8, 11) mit Zubehör für die Vorbereitung des Abdruckaufnahmepräparates,
. ein, in einem Behälter, einer Tube, einem Fläschchen, einem Topf oder dergleichen konditioniertes Präparat (4) für die Abdruckaufnahme,
. einen Behälter (7) mit Klebestoff, mit welchem das Präparat zur Abdruckaufnahme auf die inneren Seiten eines jeden Abdruckhalters geklebt wird (5, 6),
. ein Instrument oder Material, mit welchem die Okklusion registriert wird (12),
. ein Instrument oder Material, das die Aufnahme der Farbe erlaubt (13),
. ein Paar sterilisierte Handschuhe (14),
. eine Gebrauchsanweisungbroschüre oder Notizbuch (15) oder ein audiovisuelles Material mit der Gebrauchsanweisung.

2. Materialkit nach Anspruch 1 **dadurch gekennzeichnet, daß** es zwei Abdruckhalter (5, 6) enthält (einen für den Unterkiefer und den anderen für den Oberkiefer).

3. Materialkit nach Anspruch 1 oder 2 **dadurch gekennzeichnet, daß** der oder jeder Abdruckhalter verstellbar ist.

4. Materialkit nach Anspruch 3 **dadurch gekennzeichnet, daß** der oder jeder Abdruckhalter der Länge nach verstellbar ist.

5. Materialkit nach Anspruch 3 **dadurch gekennzeichnet, daß** der oder jeder Abdruckhalter quer verstellbar ist.

6. Materialkit nach Anspruch 3 **dadurch gekennzeichnet, daß** der oder jeder Abdruckhalter der Länge nach und quer verstellbar ist.

7. Materialkit nach Anspruch 1 **dadurch gekennzeichnet, daß** das Präparat für die Abdruckaufnahme aus zwei Komponenten besteht.

8. Materialkit nach Anspruch 1 **dadurch gekennzeichnet, daß** das Präparat für die Abdruckaufnahme dosiert eingefüllt ist.

9. Materialkit nach Anspruch 1 **dadurch gekennzeichnet, daß** der Mischer ein Spritzmischer ist (11).

10. Materialkit nach dem vorangehenden Anspruch **dadurch gekennzeichnet, daß** der Spritzmischer (11) mit dem Präparat für die Abdruckaufnahme vorgefüllte Behälter umfasst.

11. Materialkit nach Anspruch 8 **dadurch gekennzeichnet, daß** das Präparat (4) für die Abdruckaufnahme in mikrodosierte Nachfüllungen für den Spritzmischer (11) verpackt wird.

12. Materialkit nach Anspruch 9 oder 10 **dadurch gekennzeichnet, daß** der Spritzmischer (11) für einen einmaligen Gebrauch vorgesehen ist.

13. Materialkit nach irgendeinem der vorangehenden Ansprüche 9 bis 12 **dadurch gekennzeichnet, daß** der Spritzmischer (11) ein Gehäuse (16) aufweist das hauptsächlich aus zwei röhrenförmigen Abteilen (17, 18) besteht, die auf einem Unterteil stehen (19) besteht, und die in eine Mischkammer (20) führen in welcher die Mischung der zwei Bestandteile erfolgt bevor sie durch eine Spritzdüse oder Spritzkanüle (21) ausgehen, wobei das Präparat vermischt und mittels einer handbedienten Aktion auf eine Druckknopftaste (22) die auf ein Kolbensystem wirkt, ausgestoßen wird.

14. Materialkit nach dem vorangehenden Anspruch **dadurch gekennzeichnet, daß** die röhrenförmigen Abteile (17, 18) auswechselbar sind.

15. Materialkit nach Anspruch 1 **dadurch gekennzeichnet, daß** der oder jeder Abdruckhalter (5, 6) mit einem Klebestoff imprägniert, bedeckt oder überstrichen ist.

16. Materialkit nach dem vorangehenden Anspruch **dadurch gekennzeichnet, daß** der Klebestoff durch ein äußeres Mittel aktiviert werden kann.

17. Materialkit nach Anspruch 15 **dadurch gekennzeichnet, daß** der Klebestoff mittels einer dünnen, anläßlich des Gebrauchs abziebaren Folie geschützt wird.

18. Materialkit nach Anspruch 1 **dadurch gekennzeichnet, daß** das Instrument mit welchem die Okklusion registriert wird ein Blatt aus Wachs ist (12).

19. Materialkit nach Anspruch 1 **dadurch gekennzeichnet, daß** die Schachtel oder das Kästchen (1) in Fächer unterteilt ist.

20. Materialkit nach dem vorangehenden Anspruch **dadurch gekennzeichnet, daß** die Kästchenunterlage (1) aus einem warmgeformte Kunststoff hergestellt ist.

21. Materialkit nach Anspruch 19 **dadurch gekennzeichnet, daß** die Kästchenunterlage (1) aus einem eingespritzten Kunststoff hergestellt ist.
